Europäisches Patentamt

European Patent Office

Office européen des brevets

(19)

(11) Veröffentlichungsnummer : **0 172 505 B1**

(12) **EUROPÄISCHE PATENTSCHRIFT**

(45) Veröffentlichungstag der Patentschrift :
07.03.90

(21) Anmeldenummer : 85109997.8

(22) Anmeldetag : 08.08.85

(51) Int. Cl.⁵ : **H 01 M  8/00, C 02 F  1/46, H 01 M  4/96, H 01 M  4/90**

(54) Brennstoffzelle.

(30) Priorität : 18.08.84 DE 3430485

(43) Veröffentlichungstag der Anmeldung :
26.02.86 Patentblatt 86/09

(45) Bekanntmachung des Hinweises auf die Patenterteilung : 07.03.90 Patentblatt 90/10

(84) Benannte Vertragsstaaten :
**AT BE CH DE FR GB IT LI NL**

(56) Entgegenhaltungen :
EP—A— 0 042 624
DE—A— 1 571 985
DE—C—  747 203
FR—A— 2 168 560
FR—A— 2 316 196
FR—A— 2 385 648
GB—A— 2 024 869
US—A— 3 284 332
US—A— 3 506 493
US—A— 3 793 173
US—A— 3 915 822

(73) Patentinhaber : **BASF Aktiengesellschaft**
**Carl-Bosch-Strasse 38**
**D-6700 Ludwigshafen (DE)**

(72) Erfinder : **Habermann, Wolfgang**
**Gonsenheimer Spiess 8**
**D-6500 Mainz 1 (DE)**
Erfinder : **Pommer, Ernst-Heinrich, Dr.**
**Berliner Platz 7**
**D-6703 Limburgerhof (DE)**
Erfinder : **Hammes, Peter, Dr.**
**Haagweg 14**
**D-6701 Ruppertsberg (DE)**
Erfinder : **Engelhardt, Hubert**
**Buergerm.-Horlacher-Strasse 84**
**D-6700 Ludwigshafen (DE)**
Erfinder : **Geiger, Wolfgang**
**Hoelderlinstrasse 5**
**D-6831 Plankstadt (DE)**
Erfinder : **Simmler, Werner, Dr.**
**Neumannstrasse 13**
**D-6700 Ludwigshafen (DE)**
Erfinder : **Huber, Guenther**
**Weinbietstrasse 21**
**D-6701 Dannstadt-Schauernheim (DE)**

EP 0 172 505 B1

## Beschreibung

Die vorliegende Erfindung betrifft eine Brennstoffzelle mit einer aktivierten kohlenstoffhaltigen Anode und Kathode, vorzugsweise zur oxidativen Reinigung von Abwässern mit Sauerstoff oder sauerstoffhaltigen Verbindungen.

In der Technik setzt man zur oxidativen Abwasserreinigung neben biologischen Verfahren chemische oder elektrochemische Oxidationsverfahren ein. In biologischen Belebtschlammanlagen ist ein weitgehender Abbau der Schadstoffe nur mit unzureichenden Raum-Zeit-Ausbeuten möglich. Kaum abgebaut werden mit dieser Technik z. B. Huminsäuren, Fulvinsäuren, Aromaten und chlorierte Kohlenwasserstoffe. Bessere Raum-Zeit-Ausbeuten wurden erreicht mit Verfahren, bei denen Luft oder Sauerstoff in Kombination mit aktivierten Kohlen zum Einsatz kommen. Der Abbaugrad entspricht dem der biologischen Belebtschlammanlagen. Ein nahezu vollständiger Abbau wird mit chemischen Verfahren erreicht, bei denen Ozon oder Wasserstoffperoxid als Oxidationsmittel zur Anwendung kommt. Die hohen Kosten und der Anfall geringer Mengen an Chlorkohlenwasserstoffen als Oxidationsnebenprodukte sind Schwachpunkte dieser Technik. Gleiche Vor- und Nachteile weist eine elektrochemische Oxidation durch Elektrolyse auf.

Es war daher die Aufgabe der vorliegenden Erfindung, ein Verfahren zu entwickeln, welches es ermöglicht, Schadstoffe im Abwasser umweltfreundlich und kostengünstig oxidativ abbauen zu können.

Diese Aufgabe wurde erfindungsgemäß dadurch gelöst, daß in einer Brennstoffzelle der eingangs genannten Art die Kathode in wäßrigen Mineralsäuren bei Potentiallagen von $\varepsilon_h = +1,3\,V$ bis $\varepsilon_h = +10\,V$ anodisch anoxidiert anschließend mit Molybdän-VI- und/oder Wolfram-VI- und/oder Vanadium-V-Verbindungen dotiert wurde, und die Anode in wäßrigen Mineralsäuren anodisch anoxidiert, anschließend in wäßrigen Mineralsäuren kathodisch reduziert und mit Kobalt- und/oder Nickelhydroxid und/oder Kupferhydroxid und/oder Zinkhydroxid imprägniert wurde, wobei Anode und Kathode durch einen porösen Polyelektrolyten separiert sind, der vom Abwasser durchströmt wird.

Weitere Merkmale der Erfindung sind Gegenstand der Unteransprüche.

Als kohlenstoffhaltige Materialien für die Elektroden kommen z. B. Graphit oder Aktivkohle in Betracht.

Die anodische Oxidation des Kohlenstoffträgers wird für die Kathode und Anode in wäßrigen Mineralsäuren, wie z. B. Salpetersäure, Phosphorsäure, Schwefelsäure und Perchlorsäure bei Potentiallagen von $\varepsilon_h = +1,3\,V$ bis $\varepsilon_h = +10\,V$, vorzugsweise $\varepsilon_h = 1,8\,V$ bis $\varepsilon_h = +2,5\,V$, durchgeführt.

Besonders geeignet ist wäßrige 2 — bis 80 gew.%ige, vorzugsweise 30 — bis 65 gew.%ige Salpetersäure. Die anodische Oxidation erfolgt bei Temperaturen zwischen $-2\,°C$ und $+100\,°C$, bevorzugt bei $+10\,°C$ bis $+50\,°C$ und Stromdichten von 0,1 bis 10 kA/m². Der günstigste Stromdichtebereich liegt bei der anodischen Oxidation zwischen 0,5 und 4 kA/m² äußerer Kohlenstoffoberfläche.

Die Oxidationszeit kann 2 Sekunden bis zu 2 Stunden, vorzugsweise 5 bis 30 Minuten betragen. Der gebundene Sauerstoff auf der Kohlenstoffoberfläche sollte nach der anodischen Oxidation etwa 30 Atomprozent betragen.

Zum Dotieren und Imprägnieren des anoxidierten Kathodermaterials setzt man gelöste oder fein dispergierte Verbindungen des Molybdäns, Wolframs oder Vanadiums ein.

Geeignete Molybdänverbindungen sind z. B. Ammoniumdimolybdat, Ammoniumheptamolybdat, Ammoniumdecamolybdat, Natriummolybdat, Kaliummolybdat, Molybdäntetrachlorid oder Molybdänoxitetrachlorid, geeignete Wolframverbindungen sind z. B. Natriumwolframat, Kaliumwolframat, Wolframhexachlorid oder Wolframoxitetrachlorid und als Vanadinverbindungen kommen z. B. Natrium- oder Kaliumvanadat, Alkalidivanadate oder -Tetravanadate, Natrium-Ammoniumvanadat oder Vanadiumoxitrichlorid in Betracht.

Vorzugsweise verwendet man zur Dotierung des anoxidierten Kathodenmaterials Alkalimolybdate. Bei Einsatz von Vanadinverbindungen muß für eine gute Fixierung auf der anoxidierten Kohlenstoffträgeroberfläche gesorgt werden, damit kein Vanadium in das Abwasser gelangt. Vanadiumverbindungen werden deshalb vorzugsweise in Kombination mit Wolfram- oder Molybdän-VI-Verbindungen und/oder durch Überführung in Eisen-, Titan- oder Zirkonvanadate fixiert.

Zur Dotierung löst oder dispergiert man die Molybdän-, Wolfram- oder Vanadinverbindungen oder sonstigen Zusätze in Wasser, Alkoholen wie z. B. Methanol, Ethanol, Ethern wie z. B. Methylethylether oder chlorierten Kohlenwasserstoffen, wie z. B. Chloroform oder Tetrachlorkohlenstoff.

Als bevorzugtes Lösungsmittel wird Wasser verwendet. Die Konzentration der Wolfram-, Molybdän- oder Vanadinverbindungen im Lösungsmittel kann 0,01 Gew.% bis zur Sättigungsgrenze, vorzugsweise 0,3 bis 5 Gew.% betragen.

Nach der Imprägnierung mit den Dotiermitteln kann man die Kohlenstoffträger zur besseren Fixierung trocknen, wobei Halogenide vorher hydrolysiert werden. Die eigentliche Fixierung erfolgt mit wäßrigen verdünnten Mineralsäuren oder sauren Alkalisalzen. Bevorzugt wird hierzu 0,1 bis 4 gew.%ige wäßrige Salpetersäure oder Schwefelsäure verwendet. Eine gute Fixierung wird erreicht, wenn man die Fixierung bei Temperaturen von $+15\,°C$ bis $+30\,°C$ bei einer Verweilzeit von 0,1 bis 3 h durchführt.

Nach der Fixierung kann eine zusätzliche Dotierung und teilweise Anreduktion der Molybdän-VI-, Wolfram-VI- und Vanadium-V-Verbindungen mit Sulfiden oder Schwefelwasserstoffen erfolgen.

Hierzu verwendet man bevorzugt wäßrige Ammoniumsulfid- oder Alkalisulfidlösungen wie z. B. Natriumsulfid oder Kaliumsulfid. Die Konzentration dieser Lösungen kann 0,1 bis 10 Gew.% an Alkalisulfid, vorzugsweise 1 bis 6 Gew.%, betragen. Zur Dotierung wird das Katalysatormaterial wenige Minuten, vorzugsweise 1 bis 8 Minuten, in die Alkalisulfidlösungen getaucht, anschließend abgetrennt und mit verdünnten wäßrigen Mineralsäuren vom überschüssigen Sulfid befreit.

An Stelle von Sulfiden können zur Anreduktion aber auch andere Reduktionsmittel wie z. B. Hydrazinhydrat, Hydroxylamin, Hydrochinon, Wasserstoff oder die kathodische Reduktion eingesetzt werden.

Als besonders geeignete Aktivierung und Fixierung hat sich nach der anodischen Oxidation des Kohlenstoffträgers eine Dotierung mittels Molybdän-VI- oder Vanadium-V- mit Titan-III- oder Titan-IV-Verbindungen und/oder mit Jod-VII- und/oder mit Jod-V- und/oder mit Tellur-VI-Verbindungen erwiesen. Bei dieser Aktivierung sollte das Atomverhältnis Molybdän bzw. Vanadium zu Titan 2 : 1, Molybdän bzw. Vanadium zu Jod 1 : 1 und Molybdän bzw. Vanadium zu Tellur 6 : 1 bzw. in den Mischungen entsprechend den Verhältnissen angepaßt werden.

Als Titan-Verbindungen setzt man vorzugsweise Titantrichlorid oder Titanylsulfat ein. Jod wird bevorzugt in Form der Alkalijodate oder Perjodate verwendet, während Tellur vorzugsweise als Alkalitellurit zum Einsatz kommt.

An Stelle von Tellurverbindungen können auch Selenverbindungen verwendet werden. Aus toxikologischen Gründen wird man in den meisten Fällen aber auf den Einsatz dieser Verbindungen verzichten.

Als Oxidationsmittel für die Kathode wird vorzugsweise Sauerstoff oder Luft verwendet. In Sonderfällen können aber auch andere Oxidantien wie z. B. Wasserstoffperoxid, Peroxidisulfate, Perborate, Chlorate, Chlorite, Chlordioxid, Ozon, Salpetersäure, nitrose Gase, Stickstoffdioxid, Eisen-III-salze, Eisen-III-salz-Wasserstoffperoxidmische, Salpetersäure-Wasserstoffperoxidgemische und Salpetersäure-Wasserstoffperoxid-Eisen-III-salzgemische verwendet werden. Bei Verwendung dieser Oxidantien muß die Kathode auf Potentialwerte von $\varepsilon_h < + 1,34$ V polarisiert werden, damit es nicht zur Bildung von Chlorkohlenwasserstoffen kommt.

Bei der Fertigung der Anoden werden die in der Salpetersäure anodisch oxidierten Kohlenstoffträger zunächst einer kathodischen Reduktion in wäßrigen Mineralsäuren unterzogen, um Oxidationsmittelreste in den Poren zu entfernen. Als Mineralsäuren können z. B. wäßrige Schwefelsäure, Phosphorsäure und Salzsäure verwendet werden. Vorzugsweise kommt 5 bis 20 gew.%ige wäßrige Schwefelsäure zum Einsatz. Die kathodische Reduktion erfolgt bevorzugt bei Stromdichten von 0,2 bis 2 kA/m² und Temperaturen von + 10 °C bis + 50 °C. Die Reduktionszeit kann 10 Minuten bis zu 2 Stunden, vorzugsweise 15 bis 30 Minuten, betragen.

An Stelle der kathodischen Reduktion kann auch eine chemische Reduktion mit Reduktionsmitteln wie z. B. Wasserstoff, Hydrazinhydrat, Hydroxylamin oder Hydrochinon durchgeführt werden.

Zur Dotierung der so vorbehandelten Kohlenstoffträger setzt man gelöste oder fein dispergierte Verbindungen des Kobalts, Nickels, Kupfers und Zinks ein, die anschließend mit alkalischen Fällungsmitteln in die Hydroxide überführt werden.

Geeignete Kobaltverbindungen sind z. B. Kobalt-II-Sulfat, Kobalt-II-nitrat und Kobalt-II-chlorid; geeignete Nickelverbindungen sind z. B. Nickel-II-chlorid, Nickel-II-sulfat, Nickel-II-nitrat und Nickelammoniumsulfat; geeignete Kupferverbindungen sind z. B. Kupfer-II-halogenide, Kupfer-II-ammoniumchlorid, Kupfer-II-nitrat und Kupfer-II-sulfat und als Zinkverbindungen kommen z. B. Zink-II-halogenide, Zink-II-ammoniumchlorid, Zink-II-nitrat, Zinkammoniumsulfat und Zinksulfat in Betracht.

Bevorzugt sind Kobalthydroxid, Nickelhydroxid oder Nickelhydroxid/Zinkhydroxidgemische geeignet.

Zur Dotierung löst oder dispergiert man die Kobalt-, Nickel-, Kupfer- oder Zinkverbindungen in Wasser oder Alkoholen, wie z. B. Methanol oder Ethanol. Als bevorzugtes Lösungsmittel wird Wasser verwendet. Die Konzentration der Kobalt-, Nickel-, Kupfer- und Zinkverbindungen kann 0,02 Gew.% bis zur Sättigungsgrenze, vorzugsweise 0,5 bis 5 Gew.%, betragen.

Nach der Imprägnierung mit den Dotiermitteln kann man den Kohlenstoffträger für das Anodenmaterial zur besseren Fixierung trocknen. Die eigentliche Fixierung erfolgt mit wäßrigen verdünnten Alkalihydroxiden, Ammoniumhydroxid, Ammoniumsulfid, Ammoniumhydroxid/Ammoniumsulfidgemischen, Alkalisulfiden oder Hexamethylentetramin. Bei Verwendung von Nitraten kann die Fällung auch dadurch erfolgen, daß man das Nitrat kathodisch reduziert oder mit Reduktionsmitteln zum Ammoniak umsetzt. Geeignet sind hier z. B. Hydrochinon oder Lithiumaluminiumhydrid. Am günstigsten hat sich eine Fixierung der Dotiermittel mit wäßrigen Alkalisulfiden erwiesen. Bevorzugt kommen hier wäßrige Lösungen mit 0,2 bis 5 Gew.% Natrium- oder Kaliumsulfid in Betracht. Hochaktive Anoden werden auch erhalten, wenn man die mit den Salzen oder Hydroxiden dotierten Kohlenstoffträger in 3 Gew.% Natriumsulfatlösung einsetzt, die 0,1 Gew.% Dextrose sowie 0,1 Gew.% Harnstoff enthalten und mit adaptierten sulfatreduzierenden Mikroorganismen vom Typ Desulfovibrio desulfuricans angeimpft ist. Die Verweilzeit in diesem Medium sollte einige Tage, vorzugsweise 3 bis 10 Tage, betragen.

Zur Trennung von Anode und Kathode wird ein poröser Polyelektrolyt verwendet. Als Polyelektrolyte kommen anorganische Anionen- und Kationenaustauscher wie z. B. Titanoxihydrat, Zirkonoxihydrat, Kaolinit, Montmorillonit, Apatit, synthetischer Hydroxylapatit, Magnesiumoxihydrat, Aluminiumoxihydrat, Aluminium-Zirkonoxihydrat, sowie organische Anionen- und Kationenaustauscher, wie z. B. Polymerisate oder Copolymerisate aus Styrol, Styrol und Divinylbenzol, Styrol und Maleinsäureanhydrid, Acrylester und Divinylbenzol, Methacrylsäureester und Divinylbenzol, Olefinen, perfluorierten Olefinen, sowie Vinylchlorid und Aldehyde, Resorcin und Aldehyde sowie Anisol und Aldehyd, die als ladungstragende Gruppen Sulfonsäure- und/oder Carboxyl- und/oder quarternäre Ammonium- und/oder primäre, sekundäre oder tertiäre Amingruppen enthalten.

Bevorzugt kommen synthetischer Hydroxylapatit, Zirkonaluminiumoxihydrat, Zirkonoxihydrat, Titanoxihydrat sowie makroporöse Austauscher aus Styrol und Divinylbenzol oder Copolymere auf Basis von Vinylchlorid, die primäre, sekundäre oder tertiäre Amine oder Sulfonsäuregruppen als ladungstragende Gruppen enthalten, in Betracht.

Die Polyelektrolyte werden in der Brennstoffzelle, bevorzugt in Granulatform, als Schüttung zur Trennung von Anode und Kathode eingesetzt. Zur Vermeidung von Verstopfungen sollte die Korngröße vorzugsweise 2 bis 6 mm betragen. Bei Abwässern die keine suspendierten Feststoffpartikel enthalten, kann die Korngröße kleiner sein. In diesem Falle können auch poröse offenzellige Polyelektrolyte in Schwammform eingesetzt werden. Die Polyelektrolyte können auch teilweise durch Sand, Dolomit, Kalkstein, Torf und ton- oder sandhaltige Erde ersetzt sein.

Der Anteil an Polyelektrolyt sollte aber mindestens 20 Vol.% in der Schüttung zwischen Anode und Kathode betragen.

Für die technische Ausführung werden als Kathodenmaterialien Graphite mit einer offenen Porosität von > 12 % und < 28 % verwendet. Die Brennstoffzelle kann mit rohr- oder plattenförmigen Elektrodenmaterialien ausgerüstet sein. In Sonderfällen kann auch mit Granulatschüttungen gearbeitet werden. Das Oxidationsmittel, z. B. Sauerstoff, wird durch die porösen Graphitkathoden in Richtung Abwasserseite gedrückt.

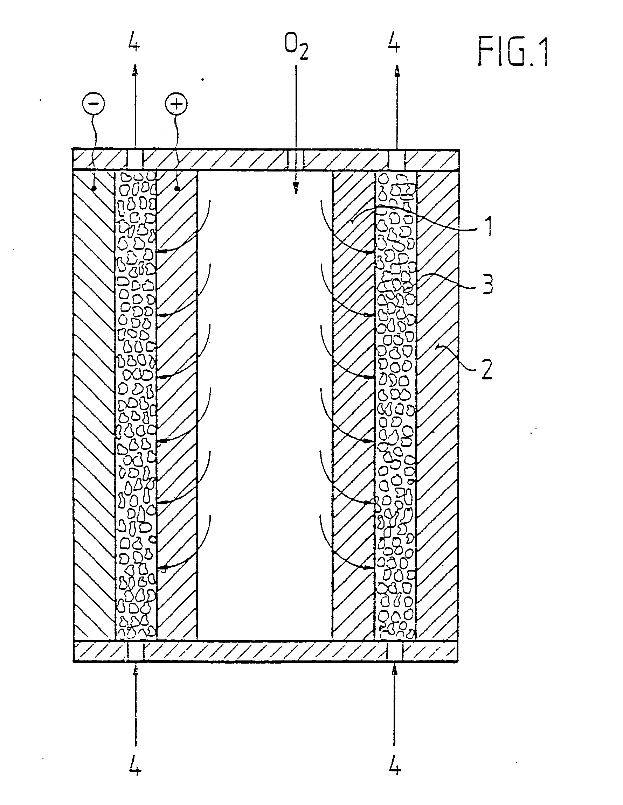

Figur 1 zeigt eine Brennstoffzelle zur Abwasseroxidation mit einer porösen, rohrförmigen Sauerstoffreduktionselektrode 1 aus Graphit und einer dichten rohrförmigen Graphitanode 2. Beide Elektroden 1, 2 sind durch eine Schüttung aus einem makroporösen Polyelektrolytgranulat 3 separiert. Beim Betrieb der Zelle wird Sauerstoff von der Kathodeninnenseite durch die Kathode auf die Abwasserseite gedrückt, während das Abwasser 4 den porösen Polyelektrolyten durchströmt. Die Sauerstoffzufuhr wird so bemessen, daß etwa 5 bis 10 % Sauerstoff mehr durch die Kathode gedrückt werden als durch die Schadstoffoxidation verbraucht werden.

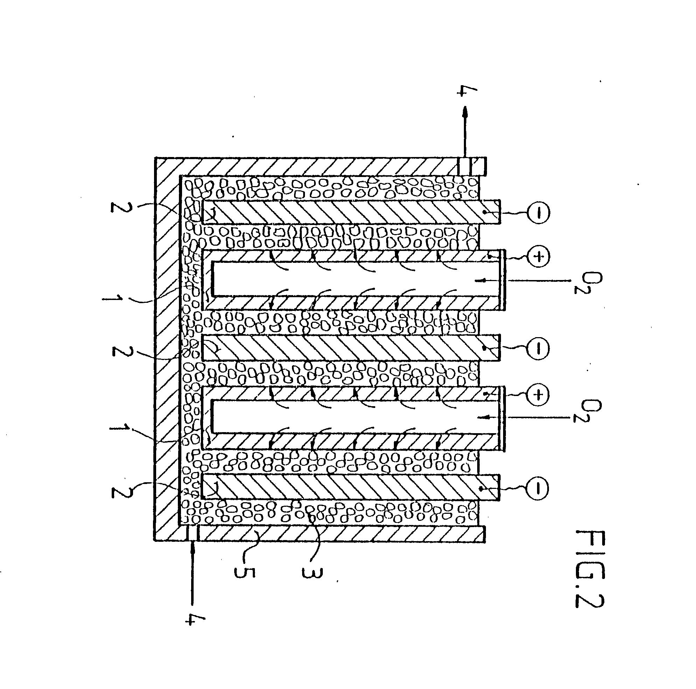

In Figur 2 ist eine Brennstoffzelle dargestellt, bei der die rohrförmigen Sauerstoffreduktionskathoden 1 und die Oxidationsanoden 2, die jede beliebige Form aufweisen können, in einem Trog 5 aus porösen, wasserdurchlässigen Polyelektrolytmaterial 3 eintauchen. Die Sauerstoffzufuhr für die Brennstoffzelle in Figur 2 ist analog der in Figur 1, während das Abwasser 4 den Trog 5 mit dem porösen Polyelektrolyten 3 durchströmt.

Der Vorteil solcher Anordnungen besteht darin, daß durch den Polyelektrolyten die Leitfähigkeit des Abwassers keine maßgebliche Rolle spielt, durch Sorption der Schadstoffe (Brennstoffe) am Polyelektrolyten die Brennstoffe gespeichert werden und durch die Sauerstoffspülung der Kathode eine Verschmutzung vermieden wird.

Beispiel 1

Eine Brennstoffzellenanordnung, die gemäß Figur 1 aufgebaut ist, besteht aus einer Sauerstoffreduktionselektrode aus porösem Elektrographit und einer Oxidationsanode aus verdichtetem Elektrographit. Die offene Porosität des Kathodenmaterials beträgt ~ 16 %, während die offene Porosität des Anodenmaterials ~ 10 % aufweist. Die Abmessungen der Kathode betragen 40 mm Innendurchmesser, 60 mm Außendurchmesser und 300 mm Länge. Das Anodenmaterial hat 80 mm Innendurchmesser, 100 mm Außendurchmesser und 300 mm Länge. Die Kathode wurde durch folgende Verfahrensschritte aktiviert :

— Anodische Oxidation der Außenseite der Graphitrohrkathode in wäßriger, 50 gew.%iger Salpetersäure bei Raumtemperatur, etwa 10 Minuten.

— Anschließende Imprägnierung mit 5 gew.%iger wäßriger Natriummolybdatlösung

— Nachfolgende Trocknung bei + 80 °C über etwa 8 Stunden

— Behandlung mit 5 gew.%iger wäßriger Natriumsulfatlösung vom pH = 1, etwa 5 Minuten

— Waschen mit Wasser und Behandlung mit 0,5 %iger wäßriger Natriumsulfidlösung etwa 2 Minuten

— Abschließende Entfernung des Restsulfids durch Behandlung mit 0,5 gew.%iger wäßriger Salzsäure.

Zur Aktivierung der Anode wurden folgende Verfahrensschritte durchgeführt :

— Anodische Oxidation in 30 gew.%iger wäßriger Salpetersäure bei 2 kA/m² etwa 10 Minuten

— Anschließende kathodische Reduktion in 10 gew.%iger wäßriger Schwefelsäure bei 1 kA/m² etwa 30 Minuten

— Nachfolgende Imprägnierung mit gesättigter wäßriger Nickelsulfatlösung

— Fällung des Nickels als Nickelhydroxid auf der Graphitoberfläche durch Behandlung mit 5 gew.%iger wäßriger Natronlauge

— Alterung des Nickelhydroxids bei + 80 °C etwa 2 Stunden

— Behandlung der Graphitoberfläche mit 2 gew.%iger wäßriger Natriumsulfidlösung etwa 2 Minuten.

Als Polyelektrolyt wird ein Granulatgemisch von 2 bis 4 mm Korngröße verwendet, das zu 55 Volumenprozenten aus einem synthetischen Hydroxylapatit und zu 45 Volumenprozenten aus einem Zeolith besteht.

Beim Betrieb der Brennstoffzelle wird Sauerstoff von der Innenseite der Graphitrohrkathode durch das poröse Elektrodenmaterial gedrückt und Abwasser durch den granulierten Polyelektrolyten geleitet.

Als Abwasser wird ein Wasser verwendet, welches pro Liter etwa 500 mg TOC (Total organic carbon) in Form von Fulvinsäuren, 120 mg Alkalisulfid, 60 mg Alkalisulfit und 0,8 mg chlorierte Kohlenwasserstoffe, vorwiegend als Chloroform, enthält.

Mit diesem Abwasser stellt sich eine Ruhespannung von ~ 0,85 V ein. Bei diskontinuierlicher Betriebsweise fließt zunächst ein Strom von 2 A/dm$^2$, der mit dem Abbau der Schadstoffe zusammenbricht. Nach Beendigung des Stromflusses werden pro Liter Abwasser 12 mg TOC, < 1 mg Sulfid und < 1 mg Sulfit sowie weniger als ~ 0,1 mg an chlorierten Kohlenwasserstoffen gefunden.

## Patentansprüche

1. Brennstoffzelle mit einer aktivierten kohlenstoffhaltigen Anode und Kathode zur oxidativen Reinigung von Abwässern mit Sauerstoff oder sauerstoffhaltigen Verbindungen, dadurch gekennzeichnet, daß die Kathode in wäßrigen Mineralsäuren bei Potentiallagen $\varepsilon_h = + 1,3$ V bis $\varepsilon_h = + 10$ V anodisch anoxidiert und anschließend mit Molybdän-VI- und/oder Wolfram-VI- und/oder Vanadium-V-Verbindungen dotiert wurde und die Anode in wäßrigen Mineralsäuren anodisch anoxidiert und anschließend in wäßrigen Mineralsäuren kathodisch reduziert und mit Kobalt- und/oder Nickelhydroxid und/oder Kupferhydroxid und/oder Zinkhydroxid imprägniert wurde, wobei Anode und Kathode durch einen porösen Polyelektrolyten separiert sind, der vom Abwasser durchströmt wird.

2. Brennstoffzelle nach Anspruch 1, dadurch gekennzeichnet, daß zur Trennung von Anode und Kathode eine Schüttung aus makroporösen Ionenaustauschergranulat verwendet wird.

3. Brennstoffzelle nach Anspruch 1 und 2, dadurch gekennzeichnet, daß der poröse Polyelektrolyt aus einem Anionen-Kationenaustauschergemisch besteht.

4. Brennstoffzelle nach Anspruch 1 bis 3, dadurch gekennzeichnet, daß der Kathode Sauerstoff und/oder Luft oder Wasserstoffperoxid als Oxidationsmittel zugeführt wird.

5. Brennstoffzelle nach Anspruch 1 bis 4, dadurch gekennzeichnet, daß Anode und Kathode in Rohrform ausgeführt werden, wobei die von innen mit dem Oxidationsmittel begaste bzw. beschickte poröse Kathode in das dichte Anodenrohr eintaucht und der poröse Polyelektrolyt im Ringspalt als Separator dient.

6. Brennstoffzelle nach Anspruch 1 bis 4, dadurch gekennzeichnet, daß rohrförmige Sauerstoffreduktionskathoden und Oxidationsanoden, die jede beliebige Form aufweisen können, in einem Trog aus gekörnten porösen Polyelektrolyten eintauchen.

## Claims

1. A fuel cell which has an activated carbon-containing anode and an activated carbon-containing cathode and is used for the oxidative treatment of waste waters containing oxygen and oxygen-containing compounds, wherein the cathode has been subjected to a partial anodic oxidation in an aqueous mineral acid at a potential $\varepsilon_h$ of from + 1.3 to + 10 V and then doped with molybdenum-(VI) and/or tungsten(VI) and/or vanadium(V) compounds, and the anode has been subjected to partial anodic oxidation in an aqueous mineral acid, cathodically reduced in an aqueous mineral acid and then impregnated with cobalt hydroxide and/or nickel hydroxide and/or copper hydroxide and/or zinc hydroxide, the anode and the cathode being separated by a porous polyelectrolyte, through which the waste water flows.

2. A fuel cell as claimed in claim 1, wherein a bed of macroporous ion exchanger granules is used to separate the anode from the cathode.

3. A fuel cell as claimed in claims 1 and 2, wherein the porous polyelectrolyte consists of a mixture of an anion exchanger and a cation exchanger.

4. A fuel cell as claimed in any of claims 1 to 3, wherein oxygen and/or air or hydrogen peroxide is or are fed to the cathode as an oxidizing agent.

5. A fuel cell as claimed in any of claims 1 to 4, wherein the anode and the cathode are tubular, and the porous cathode which is gassed or charged from the inside with the oxidizing agent dips into the impermeable tubular anode, and the porous polyelectrolyte in the annular gap serves as a separator.

6. A fuel cell as claimed in any of claims 1 to 4, wherein tubular oxygen reduction cathodes and oxidation anodes, each of which may be of any form, dip into a trough of porous polyelectrolyte particles.

## Revendications

1. Cellule à combustible à anode et cathode à teneur en carbone et activées pour l'épuration par oxydation des eaux usées avec de l'oxygène ou des composés à teneur en oxygène, caractérisée par le fait que la cathode a subi un début d'oxydation anodique dans des acides minéraux aqueux à une zone de potentiel de $\varepsilon_h = + 1,3$ V à $\varepsilon = + 10$ V et a été ensuite dopée avec des composés de molydène-VI et/ou tungstène-VI et/ou vanadium V, et l'anode a subi un début d'oxydation anodique dans des acides minéraux aqueux, puis a été réduite cathodiquement dans des acides minéraux aqueux et imprégnée avec de l'hydroxyde de cobalt et/ou de nickel et/ou de cuivre et/ou de zinc, l'anode et la cathode étant séparées par un polyélectrolyte poreux qui est parcouru par l'eau usée.

2. Cellule à combustible selon la revendication 1, caractérisée par le fait que, pour la séparation de l'anode et la cathode, est utilisée une masse en vrac de granulat d'échangeur d'ions macroporeux.

3. Cellule à combustible selon les revendications 1 à 2, caractérisée par le fait que le polyélectrolyte poreux est constitué d'un mélange d'échangeurs d'anions et cations.

4. Cellule à combustible selon les revendications 1 à 3, caractérisée par le fait qu'est amené à la cathode, en tant qu'agent oxydant, de l'oxygène et/ou de l'air ou du peroxyde d'hydrogène.

5. Cellule à combustible selon les revendications 1 à 4, caractérisée par le fait que les anode et cathode sont réalisées sous forme de tubulaire, la cathode poreuse chargée de l'intérieur avec l'oxydant étant introduite dans le tube anode étanche et le polyélectrolyte poreux servant de séparateur dans l'interstice annulaire.

6. Cellule à combustible selon les revendications 1 à 4, caractérisée par le fait que des cathodes de réduction d'oxygène et anodes d'oxydation tubulaires, qui peuvent avoir toute forme voulue, sont immergées dans un bac en polyélectrolytes poreux, granuleux.

FIG.1

$O_2$   $O_2$   FIG.2

$\ominus$ $\oplus$ $\ominus$ $\oplus$ $\ominus$

4

3

5

4

2   1   2   1   2